# EUROPÄISCHE PATENTSCHRIFT

(11) **EP 0 901 939 B1**
(45) Veröffentlichungstag und Bekanntmachung des Hinweises auf die Patenterteilung: **27.02.2002**
(21) Anmeldenummer: 98115807.4
(22) Anmeldetag: 21.08.1998
(51) Int. Cl.: B60R 13/01, B60P 1/28, B62D 29/00

(54) **Profil für einen Kipperboden**
Tipper floor
Plancher pour benne basculante

(30) Priorität: 10.09.1997 DE 19739595
(43) Veröffentlichungstag der Anmeldung: 17.03.1999
(73) Patentinhaber: DaimlerChrysler AG, 70567 Stuttgart (DE)
(72) Erfinder: Silvanus, Jürgen, 81541 München (DE); Schoberth, Achim, 82024 Taufkirchen (DE)

(56) Entgegenhaltungen:
- EP-A- 0 508 434
- DE-A- 2 408 336
- US-A- 5 372 775
- US-A- 5 562 981
- ANGEHRN, GROSS, KOEWIUS: "Aluminium-Konstruktionen des Nutzfahrzeugbaus" 1990 , ALUMINIUM-VERLAG , DUSSELDORF XP002081346 * Seite 167 - Seite 192 *

## Beschreibung

Die Erfindung betrifft ein Profil für einen Kipperboden, insbesondere einen Kipperbrücken- oder Kippermuldenboden, das wenigstens einen Steg mit einer dem Ladegut zugewandten Seitenfläche aufweist, sowie einen daraus gebildeten Kipperboden.

In "Aluminium-Konstruktionen des Nutzfahrzeugsbaus" von Angehrn, Gross und Koewius, Aluminium-Verlag Düsseldorf, 1990, Seiten 167-192, sind nachfolgend Bauweisen von Kipperböden beschrieben.

Beim Transport von Schüttgut in Fahrzeugen mit (Leichtmetall-)Kippern tritt aufgrund der häufigen Be- und Entladevorgänge ein abrasiver Verschleiß des Kipperbodens auf, der in dessen hinterem Teil am stärksten ist. Bei einem bekannten Kipperboden wird die Ladefläche aus Blechen, z.B. aus AlMgMn, gebildet, die an tragenden Profilen befestigt sind. Tritt an den Blechen Verschleiß auf, so wird die Ladefläche durch Aufschweißen neuer Bleche ausgebessert. Diese Bauweise besitzt den Nachteil langer Montagezeiten durch die aufwendigen Schweißarbeiten. Zudem ist die mechanische Belastbarkeit der Bleche verhältnismäßig gering.

Bei einer anderen Bauweise werden Profile zur Bildung des Kipperbodens verwendet. Die Profile werden auf die gewünschte Länge entsprechend der Abmessungen des Kipperbodens hergestellt oder geschnitten und zur Bildung des Kipperbodens längsseitig nebeneinander angeordnet. Benachbarte Profile sind jeweils durch Schweißen oder andere geeignete Verbindungsverfahren miteinander verbunden.
Gegenüber der Blechbauweise hat die Profilbauweise den Vorteil einer einfacheren Herstellung, einer Verkürzung der Montagezeiten durch den geringeren Schweißaufwand sowie einer höheren mechanischen Belastbarkeit.

Aus Kostengründen werden bevorzugt nur im hinteren Bereich des Kipperbodens, wo der abrasive Verschleiß am stärksten auftritt, Profile mit einer größeren Wandstärke eingesetzt. Dieses hat jedoch den Nachteil einer zwangsweisen Querverlegung der Profile bei der Bildung des Kipperbodens, die im Vergleich zu deren Längsverlegung eine größere Anzahl an Teilen verbunden mit einem größeren Montageaufwand erfordert. Zudem hat die Herstellung von Profilen mit unterschiedlichen Wandstärken erhöhte Werkzeug- und Fertigungskosten zur Folge.

Aus der Schrift EP 0 508 434 A1 ist ein Verfahren zur Herstellung von Strangpreßprofilteilen mit hoher Oberflächenverschleißfestigkeit bekannt. Derartige Strangpreßprofile bestehen aus einem Kern aus einem monolithischen Metall und einem darin eingebetteten Verbundkörper. Der Verbundkörper besteht aus einem Metallmatrix-Material, das eine hohe Verschleißfestigkeit hat.

Der Erfindung liegt die Aufgabe zugrunde, ein Profil für einen Kipperboden der eingangs beschriebenen Gattung zu schaffen, das eine verbesserte Beständigkeit gegen abrasiven Verschleiß aufweist. Zudem soll ein aus den Profilen gebildeter, möglichst wirtschaftlich herstellbarer und verlegbarer Kipperboden mit verbesserter Verschleißbeständigeit geschaffen werden.

Die das Profil betreffende Lösung der Aufgabe ist erfindungsgemäß dadurch gekennzeichnet, daß wenigstens ein an die Seitenfläche angrenzender Bereich des Profils mit Portikeln aus Keramik verstärht

Ein Vorteil des erfindungsgemäßen Profils besteht darin, daß durch dessen geringeren abrasiven Verschleiß im hinteren Bereich eines Kipperbodens keine Profile mit dickerer Wandstärke eingesetzt werden müssen. Damit entfällt die zwangsweise Querverlegung der Profile und die Notwendigkeit verschiedene Werkzeuge bei deren Herstellung einzusetzen. Zudem kann Material eingespart werden, da die Profile insgesamt eine geringere Wandstärke aufweisen können.

In einer bevorzugten Ausgestaltung besteht das Profil im wesentlichen aus einem Leichtmetall, das höchst bevorzugt Aluminium bzw. eine Aluminiumlegierung, wie z.B. AlMgSi 0,7, ist.

Die Partikeln bestehen aus Keramik, wie z.B. Al₂O₃ oder SiC.

Es ist bspw. bei einer schweißtechnischen Verbindung benachbarter Profile vorteilhaft, daß der an die gegenüberliegenden, im allgemeinen quer oder ggf. auch schräg zur Seitenfläche verlaufenden Stirn- bzw. Seitenflächen des Stegs angrenzende Bereich nicht partikelverstärkt ist, so daß ein stabiler Schweißprozeß od.dgl. bei der Verbindung der Profile zur Bildung eines Bodens gewährleistet ist.

Bevorzugt sind maximal 15% der Querschnittsfläche des Profils partikelverstärkt, um einen an den jeweiligen Anwendungsfall anpaßbaren, jedoch möglichst wirtschaftlichen Werkstoffeinsatz zu erreichen. Aus diesem Aspekt ist es vorteilhaft, daß das Profil durch Kostrangpressen einer Leichtmetall-Knetlegierung und einer den partikelverstärkten Bereich bildenden Schicht ausgebildet bzw. hergestellt ist. Alternativ kann eine den partikelverstärkten Bereich bildende Schicht auch durch thermisches Spritzen auf das nicht partikelverstärkte (Ausgangs-)Profil aufgebracht werden.

In einer weiteren vorteilhaften Ausgestaltung ist das Profil vollständig partikelverstärkt, wobei das Profil zweckmäßigerweise aus einem homogenen, partikelverstärkten Material mit einer Matrix aus Leichtmetall besteht. Das Profil wird in diesem Fall bevorzugt durch Strangpressen hergestellt bzw. ausgebildet.

Es ist zweckmäßig, daß das Profil ein offenes Profil, wie z.B. ein H-, T- oder U-Profil, ist, wobei bspw. bei einem H-förmigen Profil der Steg, der die dem Ladegut zugewandte Seitenfläche aufweist, einer der beiden quer zu einem Verbindungssteg verlaufenden, gegenüberliegenden und im allgemeinen gleich langen Stege ist.

Alternativ kann es vorteilhaft sein, ein geschlossenes Profil, wie z.B. ein Rechteckprofil, auszubilden, wobei auch ein nur einen Steg umfassendes Flachmaterial einsetzbar ist.

Die den Kipperboden betreffende Lösung der Aufgabe ist erfindungsgemäß dadurch gekennzeichnet, daß die Ladefläche des Kipperbodens von den Seitenflächen gebildet ist und wenigstens ein an die Seitenflächen angrenzender Bereich der Profile mit Partikeln aus Keramik verstärkt ist.

Bevorzugt sind die Profile parallel zur Längsrichtung des Bodens angeordnet, unter der die im allgemeinen in Fahrtrichtung verlaufende Richtung verstanden wird, in der der Kipperboden seine größte Abmessung aufweist. Gegenüber einer Querverlegung der Profile hat dieses den Vorteil einer Reduzierung der Profilanzahl und damit verbunden einer Verringerung des Montageaufwands. Bei einer Querverlegung ist hingegen vorteilhaft, daß die wenigstens teilweise partikelverstärkten Profile nur den hinteren Bereich der Ladefläche bilden und der restliche Bereich durch preiswertere, unverstärkte Profile gebildet ist.

Es ist vorteilhaft, daß benachbarte Profile durch Schweißen an ihren Längsseiten miteinander verbunden sind, wobei auch andere geeignete, insbesondere auch lösbare, Fügeverfahren bzw. Verbindungsarten wie kleben, schnappen, nieten, verschrauben oder -bolzen je nach Anwendung möglich sind.

Weitere bevorzugte Ausgestaltungen der Erfindung sind in den Unteransprüchen beschrieben.

Im folgenden wird die Erfindung unter Bezugnahme auf eine Zeichnung anhand von Ausführungsbeispielen näher erläutert. Es zeigt:
- Fig. 1: eine Querschnittsansicht eines Ausführungsbeispiels des erfindungsgemäßen Profils für einen Kipperboden,
- Fig. 2: eine Querschnittsansicht eines weiteren Ausführungsbeispiels des erfindungsgemäßen Profils für einen Kipperboden,
- Fig. 3: eine perspektivische Ansicht einer Kipperbrücke bzw. -mulde, in der eine Ausgestaltung des erfindungsgemäßen Kipperbodens dargestellt ist, und
- Fig. 4: eine perspektivische Ansicht, in der eine alternative Ausgestaltung des erfindungsgemäßen Kipperbodens dargestellt ist.

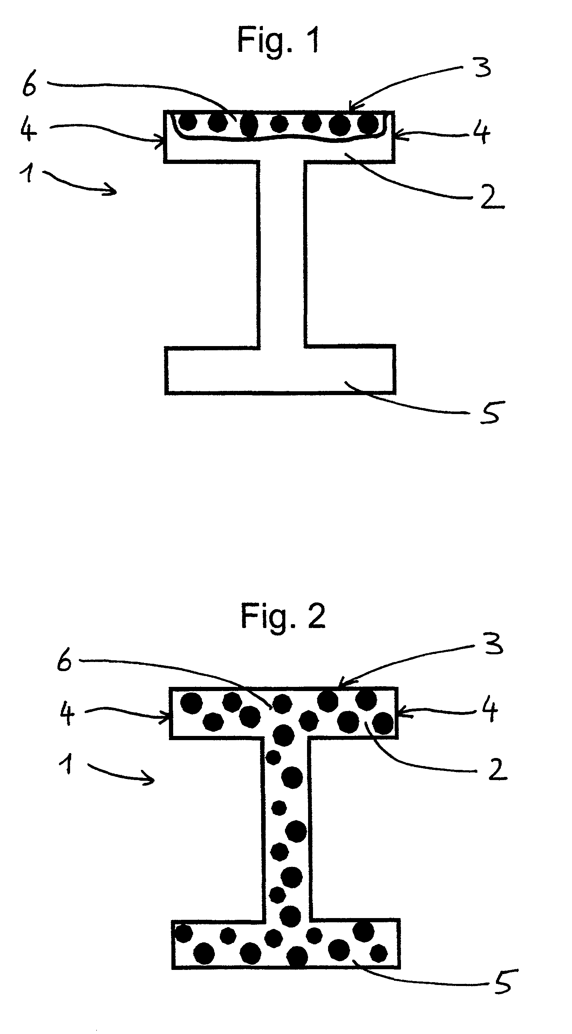

Fig. 1 zeigt ein Ausführungsbeispiel des im ganzen mit 1 bezeichneten erfindungsgemäßen Profils für einen Kipperboden im Querschnitt. Es handelt sich um ein H-förmiges Profil mit einem Steg 2, dessen äußere Seitenfläche 3 im montierten Zustand einen Teil der Ladefläche eines Kipperfahrzeuges bildet. Der Steg 2 weist ebenso wie das Profil 1 insgesamt eine in Längsrichtung konstante Querschnittsfläche auf. Bei der Montage werden mehrere Profile 1, deren Anzahl und jeweilige Länge auf die Abmessungen des Kipperbodens abzustimmen ist, so nebeneinander angeordnet, daß ihre im allgemeinen nach außen gewandten Seitenflächen 3 fluchten und zusammen eine ebene Ladefläche bilden. Alternativ können die Profile 1 z.B. auch versetzt angeordnet werden, so daß sich eine gestufte, d.h. regelmäßige Vertiefungen aufweisende Ladefläche ergibt.

Die Profile 1 werden bei der Montage an ihren gegenüberliegenden, quer zur Seitenfläche 3 verlaufenden Seiten- oder Stirnflächen 4 durch Schweißen miteinander verbunden, wobei auch andere geeignete Fügeverfahren, wie insbesondere auch lösbare Verbindungsarten, anwendbar sind. Bei dem H-förmigen Profil 1 können benachbarte Profile zur Erhöhung der Stabilität gegenüberliegenden, zweiten Steg 5 durch Schweißen miteinander verbunden werden. Wenn alternativ ein U-förmiges Profil eingesetzt wird, so bildet zweckmäßigerweise der die beiden gegenüberliegenden Flanken der U-Form verbindende Quersteg den Steg 2, der die einen Teil der Ladefläche bildende, äußere Seitenfläche 3 aufweist. Bei einem T-Profil bildet der sich zu beiden Seiten des Vertikalstegs erstreckende Quersteg den die Seitenfläche 3 aufweisenden Steg 2.

Das in Fig. 1 gezeigte Profil 1 ist lediglich partiell partikelverstärkt. Es besteht im wesentlichen aus Aluminium und einem mit Keramikpartikeln aus Al₂O₃ verstärkten Bereich 6. Das Profil 1 ist durch Kostrangpressen einer Aluminium-Knetlegierung und einer den partikelverstärkten Bereich 6 bildenden Schicht hergestellt. Alternativ kann die Knetlegierung auch aus einem anderen Leichtmetall und die Partikel aus einem anderen (Verstärkungs-)Material, wie z.B. SiC, bestehen. Der partikelverstärkte Bereich 6 liegt unmittelbar an der die Ladefläche des Kipperbodens bildende Seitenfläche 3 des Stegs 2. Der partikelverstärkte Bereich 6 erstreckt sich im vorliegenden Fall einer schweißtechnischen Verbindung nicht in den an die Stirnflächen 4 des Stegs 2 angrenzenden Bereich, um einen stabilen, von den Verstärkungspartikeln unbeeinflußten Schweißprozeß bei der Verbindung benachbarter Profile 1 zur Bildung des Bodens zu gewährleisten.

Während bei dem in Fig. 1 gezeigten Profil 1 lediglich der kleine, an die Seitenfläche 3 angrenzende Bereich 6 mit Keramikpartikeln verstärkt ist, kann dieser Bereich je nach Anwendungsfall erweitert werden und bspw. den gesamten Steg 2 umfassen. Auch ein solches Profil läßt sich wirtschaftlich herstellen, indem eine Aluminium-Knetlegierung mit einer mit Keramikpartikeln versehenen Schicht kostranggepreßt werden. Alternativ kann die die Keramikpartikel aufweisende Schicht durch Flammspritzen oder jedes andere geeignete Verfahren auf ein unverstärktes Leichtmetall- bzw. Aluminiumausgangesprofil aufgebracht werden.

In Fig. 2 ist ein weiteres Ausführungsbeispiel des erfindungsgemäßen Profils 1 für den Kipperboden dargestellt, bei dem nicht lediglich der an die Seitenfläche 3 des Stegs 2 angrenzende Bereich 6, sondern das gesamte Profil 1 mit Keramikpartikeln verstärkt ist. Ein solches Material ist homogen, besteht aus einer mit Keramikpartikeln verstärkten Leichtmetall- bzw. Aluminiummatrix und wird zur Ausbildung des Profils 1 stranggepreßt.

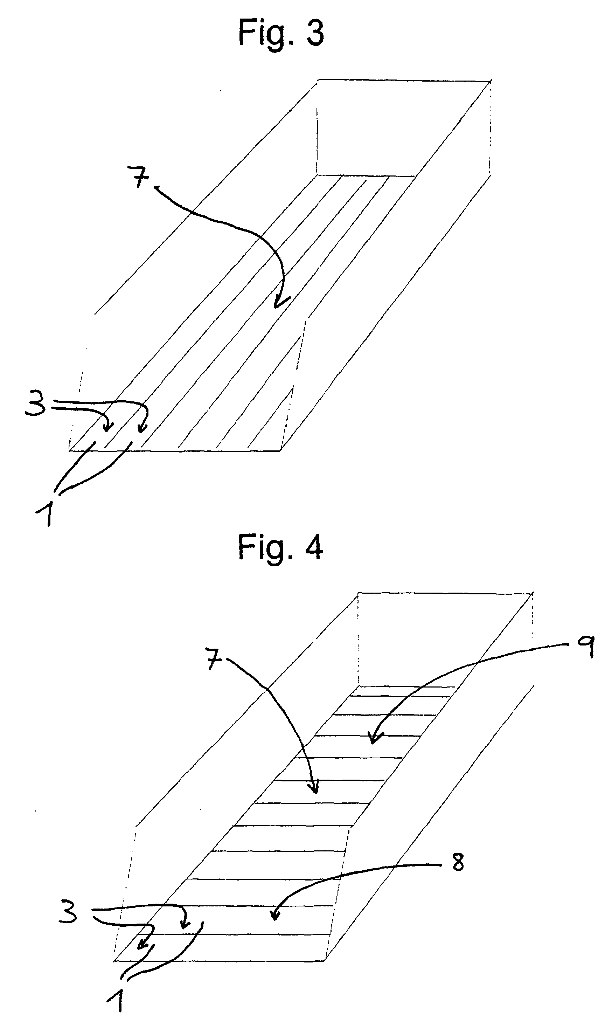

Fig. 3 zeigt in einer stark vereinfachten, perspektivischen Darstellung eine Kipperbrücke bzw. -mulde mit einer Ausgestaltung des erfindungsgemäßen Kipperbodens, der in Längsrichtung, d.h. im allgemeinen in Fahrtrichtung bzw. in Richtung der längsten Abmessung des Kipperbodens, verlegt ist. Die Längsverlegung der Profile 1 hat gegenüber der in Fig. 4 in einer entsprechenden Darstellung gezeigten Querverlegung den Vorteil, daß die Anzahl der benötigen Profile 1 und der Montageaufwand geringer ist. Von den jeweiligen Seitenflächen 3 der Profile 1 gebildete Ladefläche 7 weist in Folge des an die Seitenfläche 3 angrenzenden partikelverstärkten Bereichs 6 einen wesentlich geringeren abrasiven Verschleiß als jene aus dem Stand der Technik auf.

Bei der in Fig. 4 dargestellten Querverlegung ist von Vorteil, daß aus Kostengründen ggf. nur ein hinterer, dem Verschleiß am stärksten ausgesetzter Bereich 8 der Ladefläche 7 des Kipperbodens durch partikelverstärkte Profile 1 gebildet wird, während ein vorderer Bereich 9 durch unverstärkte Profile 1 gebildet wird. Alternativ kann bspw. auch der hintere Bereich 8 der Ladefläche 7 mit vollständig und der vordere Bereich 9 mit partiell partikelverstärkten Profilen 1 gebildet sein.

## Patentansprüche

1. Profil für einen Kipperboden, insbesondere einen Kipperbrücken- oder Kippermuldenboden, das wenigstens einen Steg mit einer dem Ladegut zugewandten Seitenfläche aufweist, **dadurch gekennzeichnet, daß** wenigstens ein an die Seitenfläche (3) angrenzender Bereich (6) des Profils (1) mit Partikeln aus Keramik verstärkt ist und daß der an die gegenüberliegenden, quer zur Seitenfläche (3) verlaufenden (Stirn-)Flächen (4) des Stegs (2) angrenzende Bereich nicht partikelverstärkt ist.

2. Profil nach Anspruch 1, **dadurch gekennzeichnet, daß** das Profil (1) im wesentlichen aus Leichtmetall besteht.

3. Profil nach Anspruch 2, **dadurch gekennzeichnet, daß** das Leichtmetall Aluminium ist.

4. Profil nach einem oder mehreren der vorhergehenden Ansprüche, **dadurch gekennzeichnet, daß** maximal 15% der Querschnittsfläche des Profils (1) partikelverstärkt sind.

5. Profil nach einem oder mehreren der vorhergehenden Ansprüche, **dadurch gekennzeichnet, daß** das Profil (1) durch Kostrangpressen ausgebildet ist.

6. Profil nach einem oder mehreren der Ansprüche 1 bis 4, **dadurch gekennzeichnet, daß** eine den partikelverstärkten Bereich (6) bildende Schicht durch thermisches Spritzen auf ein unverstärktes (Ausgangs-)Profil aufgebracht ist.

7. Profil nach einem oder mehreren der Ansprüche 1 bis 3, **dadurch gekennzeichnet, daß** der Steg (2) bis auf die (Stirn)-flächen (4) vollständig partikelverstärkt ist.

8. Profil nach einem oder mehreren der Ansprüche 1 bis 3, **dadurch gekennzeichnet, daß** das Profil (1) bis auf die (Stirn)-flächen (4) vollständig partikelverstärkt ist.

9. Profil nach Anspruch 8, **dadurch gekennzeichnet, daß** das Profil (1) aus einem homogenen, partikelverstärkten Material mit einer Matrix aus Leichtmetall besteht.

10. Profil nach Anspruch 8 oder 9, **dadurch gekennzeichnet, daß** das Profil (1) durch Strangpressen ausgebildet ist.

11. Profil nach einem oder mehreren der vorhergehenden Ansprüche, **dadurch gekennzeichnet, daß** das Profil (1) ein offenes Profil ist.

12. Profil nach einem oder mehreren der vorhergehenden Ansprüche, **dadurch gekennzeichnet, daß** das Profil (1) ein H-förmiges Profil ist und der Steg (2), der die dem Ladegut zugewandte Seitenfläche (3) aufweist, einer der beiden quer zu einem Verbindungssteg verlaufenden, gegenüberliegenden Stege (2, 5) ist.

13. Profil nach einem oder mehreren der Ansprüche 1 bis 10, **dadurch gekennzeichnet, daß** das Profil (1) ein geschlossenes Profil ist.

14. Kipperboden, insbesondere Kipperbrücken- oder Kippermuldenboden, aus einer Vielzahl von mit ihren Längsseiten nebeneinander angeordneten Profilen, die jeweils wenigstens einen Steg mit einer dem Ladegut zugewandten Seitenfläche aufweisen, **dadurch gekennzeichnet, daß** die Ladefläche (7) von den Seitenflächen (3) gebildet ist und wenigstens ein an die Seitenfläche (3) angrenzender Bereich (6) der Profile (1) mit Partikeln aus Keramik verstärht ist und daß der an die gegenüberliegenden, quer zur Seitenfläche (3) verlaufenden (Stirn-)Flächen (4) des Stegs (2) angrenzende Bereich nicht partikelverstärkt ist.

15. Kipperboden nach Anspruch 14, **dadurch gekennzeichnet, daß** die Profile (1) lösbar miteinander verbunden sind.

16. Kipperboden nach Anspruch 14, **dadurch gekennzeichnet, daß** die Profile (1) starr miteinander verbunden sind.

17. Kipperboden nach Anspruch 16, **dadurch gekennzeichnet, daß** benachbarte Profile (1) durch Schweißen längsseitig miteinander verbunden sind.

18. Kipperboden nach einem oder mehreren der Ansprüche 14 bis 17, **dadurch gekennzeichnet, daß** die Profile (1) parallel zur Längsrichtung des Kipperbodens angeordnet sind.

19. Kipperboden nach einem oder mehreren der Ansprüche 14 bis 17, **dadurch gekennzeichnet, daß** die Profile (1) quer zur Längsrichtung des Kipperbodens angeordnet sind und einen hinteren Bereich (8) der Ladefläche (7) bilden, wobei ein vorderer (restlicher) Bereich (9) der Ladefäche (7) durch unverstärkte (Ausgangs-)Profile gebildet ist.

## Claims

1. Profiled section for a tipper floor, in particular a tipper body floor or dumper body floor, which has at least one web with a side face which faces the load, **characterized in that** at least one region (6) of the profiled section (1) which adjoins the side face (3) is reinforced with ceramic particles, and **in that** the region which adjoins the opposite (end) faces (4) of the web (2), which run transversely with respect to the side face (3), is not particle-reinforced.

2. Profiled section according to Claim 1,
**characterized in that** the profiled section (1) substantially comprises light metal.

3. Profiled section according to Claim 2,
**characterized in that** the light metal is aluminium.

4. Profiled section according to one or more of the preceding claims, **characterized in that** at most 15% of the cross-sectional area of the profiled section (1) is particle-reinforced.

5. Profiled section according to one or more of the preceding claims, **characterized in that** the profiled section (1) is formed by co-extrusion.

6. Profiled section according to one or more of Claims 1 to 4, **characterized in that** a layer which forms the particle-reinforced region (6) is applied by thermal spraying to an unreinforced (starting) profiled section.

7. Profiled section according to one or more of Claims 1 to 3, **characterized in that** the web (2) is completely reinforced with particles apart from at the (end) faces (4).

8. Profiled section according to one or more of Claims 1 to 3, **characterized in that** the profiled section (1) is completely reinforced with particles apart from at the (end) faces (4).

9. Profiled section according to Claim 8,
**characterized in that** the profiled section (1) consists of a homogeneous, particle-reinforced material with a matrix of light metal.

10. Profiled section according to Claim 8 or 9,
**characterized in that** the profiled section (1) is formed by extrusion.

11. Profiled section according to one or more of the preceding claims, **characterized in that** the profiled section (1) is an open profiled section.

12. Profiled section according to one or more of the preceding claims, **characterized in that** the profiled section (1) is an H-shaped profiled section, and the web (2) which has the side face (3) which faces the load is one of the two opposite webs (2, 5) which run transversely with respect to a connecting web.

13. Profiled section according to one or more of Claims 1 to 10, **characterized in that** the profiled section (1) is a closed profiled section.

14. Tipper floor, in particular tipper body floor or dumper body floor, comprising a multiplicity of profiled sections which are arranged with their longitudinal sides next to one another and each have at least one web with a side face which faces the load, **characterized in that** the loading surface (7) is formed by the side faces (3), and at least one region (6) of the profiled sections (1) which adjoins the side face (3) is reinforced with ceramic particles, and **in that** the region which adjoins the opposite (end) faces (4) of the web (2) which run transversely with respect to the side face (3) is not particle-reinforced.

15. Tipper floor according to Claim 14, **characterized in that** the profiled sections (1) are detachably connected to one another.

16. Tipper floor according to Claim 14, **characterized in that** the profiled sections (1) are rigidly connected to one another.

17. Tipper floor according to Claim 16, **characterized in that** adjacent profiled sections (1) are joined to one another along their longitudinal sides by welding.

18. Tipper floor according to one or more of Claims 14 to 17, **characterized in that** the profiled sections (1) are arranged parallel to the longitudinal direction of the tipper floor.

19. Tipper floor according to one or more of Claims 14 to 17, **characterized in that** the profiled sections (1) are arranged transversely with respect to the longitudinal direction of the tipper floor and form a rear region (8) of the loading surface (7), a front (remaining) region (9) of the loading surface (7) being formed by unreinforced (starting) profiled sections.

## Revendications

1. Profilé pour un plancher basculant, en particulier un plancher de pont basculant ou de benne basculante, qui présente au moins une semelle avec une face latérale exposée à la matière de charge, **caractérisé en ce qu'**au moins une zone (6) du profilé (1) contiguë à la face latérale (3) est renforcée avec des particules de céramique et **en ce que** la zone contiguë aux faces (d'extrémité) (4) de la semelle (2), qui se font face et qui sont orientées transversalement à la face latérale (3), n'est pas renforcée avec des particules.

2. Profilé suivant la revendication 1, **caractérisé en ce que** le profilé (1) se compose essentiellement de métal léger.

3. Profilé suivant la revendication 2, **caractérisé en ce que** le métal léger est l'aluminium.

4. Profilé suivant une ou plusieurs des revendications précédentes, **caractérisé en ce qu'**au maximum 15 % de la surface de la section transversale du profilé (1) sont renforcés avec des particules.

5. Profilé suivant une ou plusieurs des revendications précédentes, **caractérisé en ce que** le profilé (1) est façonné par co-extrusion à la presse.

6. Profilé suivant une ou plusieurs des revendications 1 à 4, **caractérisé en ce qu'**une couche formant la zone (6) renforcée avec des particules est déposée par projection thermique sur un profilé (initial) non renforcé.

7. Profilé suivant une ou plusieurs des revendications 1 à 3, **caractérisé en ce que** la semelle (2) est entièrement renforcée avec des particules jusque sur les faces (d'extrémité) (4).

8. Profilé suivant une ou plusieurs des revendications 1 à 3, **caractérisé en ce que** le profilé (1) est entièrement renforcé avec des particules jusque sur les faces (d'extrémité) (4).

9. Profilé suivant la revendication 8, **caractérisé en ce que** le profilé (1) se compose d'un matériau homogène renforcé avec des particules, avec une matrice en métal léger.

10. Profilé suivant la revendication 8 ou 9,
**caractérisé en ce que** le profilé (1) est façonné par filage à la presse.

11. Profilé suivant une ou plusieurs des revendications précédentes, **caractérisé en ce que** le profilé (1) est un profilé ouvert.

12. Profilé suivant une ou plusieurs des revendications précédentes, **caractérisé en ce que** le profilé (1) est un profilé en H et la semelle (2), qui présente la face latérale (3) exposée à la matière de charge, est une des deux semelles (2, 5) opposées orientées transversalement à une âme de jonction.

13. Profilé suivant une ou plusieurs des revendications 1 à 10, **caractérisé en ce que** le profilé (1) est un profilé fermé.

14. Plancher basculant, en particulier plancher de pont basculant ou de benne basculante, composé d'une pluralité de profilés disposés les uns à côté des autres par leurs longs côtés, qui présentent chacun au moins une semelle avec une face latérale exposée à la matière de charge, **caractérisé en ce que** la surface de chargement (7) est formée par les faces latérales (3) et au moins une zone (6) des profilés (1) contiguë à la face latérale (3) est renforcée avec des particules en céramique et **en ce que** la zone contiguë aux faces (d'extrémité) (4) de la semelle (2), qui se font face et qui sont orientées transversalement à la face latérale (3), n'est pas renforcée avec des particules.

15. Plancher basculant suivant la revendication 14, **caractérisé en ce que** les profilés (1) sont assemblés les uns aux autres de façon séparable.

16. Plancher basculant suivant la revendication 14, **caractérisé en ce que** les profilés (1) sont rigidement assemblés les uns aux autres.

17. Plancher basculant suivant la revendication 16, **caractérisé en ce que** des profilés (1) voisins sont assemblés en longueur les uns aux autres par soudage.

18. Plancher basculant suivant une ou plusieurs des revendications 14 à 17, **caractérisé en ce que** les profilés (1) sont disposés parallèlement à la direction longitudinale du plancher basculant.

19. Plancher basculant suivant une ou plusieurs des revendications 14 à 17, **caractérisé en ce que** les profilés (1) sont disposés transversalement à la direction longitudinale du plancher basculant et forment une zone arrière (8) de la surface de chargement (7), une zone (résiduelle) avant (9) de la surface de chargement (7) étant formée par des profilés (initiaux) non renforcés.
